# EUROPEAN PATENT APPLICATION

(11) **EP 0 565 976 A1**
(43) Date of publication of application: **20.10.1993**
(21) Application number: 93105550.3
(22) Date of filing: 03.04.1993
(51) Int. Cl.: G05B 19/10

(54) **Household appliance with electronic control driven by peripheral units**

(30) Priority: 16.04.1992 IT PN920034
(71) Applicant: ZELTRON S.p.A., I-33030 Campoformido, Udine (IT)
(72) Inventor: Arrigoni, Giancarlo, I-33100 Udine (IT); Diodato, Claudio, I-33100 Udine (IT); Muzzolini, Dario, I-33010 Magnano in Riviera, Udine (IT)
(74) Representative: Busca, Luciano

(57) **Abstract**

Household appliance with an electronic control device (23) connected with the power supply mains and driven by peripheral units (5) by means of control signals, wherein magnetic coupling means (14-19) transmit power supply from the mains (20-22) to the peripheral units (5). A remote transmitter (11) provided in the peripheral units (5) drives the control device (23) with the control signals through a receiver (12) situated in the remaining portion (4) of the household appliance. The peripheral units are electrically isolated from the remaining part of the appliance.

## Description

The present invention refers to a household appliance, such as for instance a clothes washing machine, a dishwashing machine, a refrigerator, a baking and roasting oven and the like, of the type comprising an electronic control system for the operational component parts of the appliance, as well as a plurality of peripheral units which in turn are adapted to drive said electronic control system.

As it is known from the prior art, such peripheral units usually comprise at least a push-button array arranged on the outside of the appliance in correspondence of a control panel accessible to the user.

The user can in this way actuate the push-buttons in the array so as to select a pre-set operational programme of the appliance and possibly to modify some parameters thereof according to differing requirements.

In view of making it simpler to manufacture the control panel through a more flexible and ergonomic structure thereof, said push-button array should preferably be of the type featuring a so-called membrane switch construction, such as for instance the one disclosed by EP-A-0 443 944. However, owing to safety reasons this is not a feasible practice currently, due to the inadequacy, for the application, of the electric insulation ensured by such push-button arrays, which can therefore be used in low-voltage applications only. As a matter of fact, the electronic control system of a household appliance associated with the push-button array is usually connected directly to the power supply mains (220 V).

The peripheral units of a household appliance furthermore comprise sensing devices (such as for instance temperature sensors) which are usually located in hostile environments and/or in contact with liquids, and therefore are associated to a considerable risk potential in connection with the electric insulation of the related wires and cables. Such wiring harnesses furthermore tend to make it quite difficult and unpractical to install said sensors, since they usually either extend to zones of the appliance which are quite unconvenient to reach or pass through holes which shall be sealed in an air or water-tight manner.

It is therefore a main object of the present invention to provide a household appliance equipped with an electronic control system associated to electrically isolated peripheral units.

A further purpose of the present invention is to provide a household appliance of the above specified type, in which wire harnesses associated to the peripheral units are substantially reduced and simplified.

According to the invention, these aims are reached in a household appliance with electronic control system and electrically isolated peripheral units, which embodies the features recited in the appended claims. In this connection it should be noticed that the household appliance according to the present invention is meant in its broadest sense; in other words, the term household appliance is used to mean not only a washing, cooking, refrigerating or similar appliance, but also any other type of appliance or equipment for use in the home, whose operation is determined or governed by an electronic control system. For instance, the household appliance according to the invention may consist in a piece of equipment for sanitary use, such as a whirlpool bath-tub or similar apparatus.

The features and the advantages of the present invention will be more clearly apparent from the following description, which is set forth by way of non-limiting example with reference to the accompanying drawings in which:
- Figure 1 is a basic block diagram showing schematically the operation of a preferred embodiment of the household appliance according to the present invention, with a peripheral unit comprising an array of push-button controls;
- Figure 2 is a basic block diagram showing schematically the operation of a different embodiment of the household appliance illustrated in Figure 1;
- Figure 3 is a view of a preferred embodiment of a detail of the block diagram illustrated in Figure 2;
- Figure 4 is a basic block diagram showing schematically the operation of a preferred embodiment of the household appliance according to the invention, with a peripheral unit comprising a sensing device.

In the above listed Figures, substantially identical parts and items are represented with the same reference numerals.

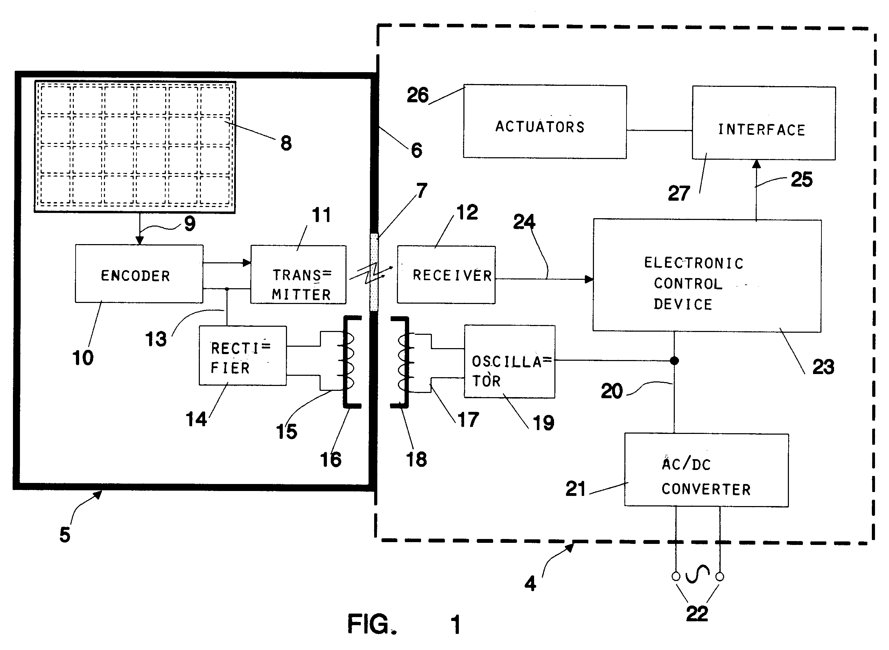

Referring to Figure 1, the household appliance illustrated therein may for instance be considered as being a washing machine comprising mainly an outer casing which is shown schematically and is indicated with the reference numeral 4. Said outer casing 4 is provided with an externally mounted control panel, which is represented schematically as a peripheral unit 5 that in a preferred way is fully isolated electrically.

The outer casing 4 and the control panel 5 are separated by a partition wall 6 which is preferably made of electrically insulating plastic material and is provided with at least a window 7 that is transparent to infrared radiation.

The control panel 5 comprises an array of control puwsh-buttons 8 which are of the membrane-switch type, as this is disclosed for instance in the afore mentioned EP-A-0 443 944, and are accessible to the user in view of selecting and/or setting the different operation sequences or programmes of the household appliance. According to the push-buttons that are actuated by the user in this connection, the push-button array 8 therefore generates at an output 9, in a *per sè* known manner, coded control signals corresponding to the selected sequence or programme.

Said output 9 drives a serial encoder 10 adapted to convert the above cited control signals into a corresponding serial signal, for instance coded in a binary form, which through a remote transmitter 11 is transmitted to a receiver 12 located within the casing 4 of the appliance. The encoder 10 may for instance comprise a SGS M3004AB1 integrated circuit, whereas the transmitter 11 is provided with a transducer that preferably comprises at least an infrared LED device. Accordingly, the receiver 12 may comprise at least a photodiode or a similar device. In particular, the transmitter 11 transmits conveys to the receiver 12, in the form of infrared rays passing through the infrared-transparent window 7, the serial control signal coming from said encoder stage 10.

It will of course be appreciated that the transmitter 11 and the receiver 12 may be of a *per sè* known different, equivalent type; they may for instance be arranged to perform the transmission/reception of said serial control signal in the form of a visible-light or ultrasonic signal. In any case, according to a feature of the present invention, said control signal will be transmitted through said partition wall 6 through coupling means 11, 12 that exclude any galvanic connection between the casing 4 and the control panel 5 of the appliance. Of course, said window 7 will be of a correspondingly appropriate type in the case that visible-light signals are used; or it can even be omitted if ultrasound signals are used.

In a *per sè* known manner, the encoder 10 and the associated transmitter 11 comprise respective power supply inputs 13 to which a low direct voltage, for instance 12 V, shall be applied. As it will be duly explained further on in this description, such a supply voltage is delivered by a corresponding output 13 of a power supply stage 14.

In a preferred way, said power supply stage 14 comprises in turn a rectifying and smoothing circuit for an alternating voltage occurring across at least a coil 15 which, in a *per sè* known manner, is connected with the input of the power supply stage 14 so as to be included in a resonant circuit.

This resonant circuit has a pre-determined resonance frequency F (eg. 30 kHz) and is formed by for instance connecting the coil 15 in parallel with an appropriate capacitor (not shown for reasons of simplicity) provided in the power supply stage 14. The coil 15 is associated with a magnetic core 16 and is coupled inductively, through the partition wall 6, with at least a corresponding coil 17 associated with a magnetic core 18. Preferably, said magnetic cores 16 and 18 are shaped in such a way as to provide an optimal magnetic coupling between the respective coils 15 and 17.

Within the casing 4, the coil 17 is part of an oscillator 19, which is preferably tuned at the afore cited frequency F, so as to provide a highly efficient magnetic coupling between the coils 15 and 17.

Said oscillator 19 is supplied (for instance with a direct voltage of 12 V) from the output 20 of a AC/DC converter 21, an input 22 of which is connected with the power supply mains (eg. 220 V) outside the outer casing 4 of the appliance. The power supply output 20 is also connected to a corresponding input of a programmable electronic control device 23, comprising for instance a Motorola 68HC11 microprocessor and having a driving input 24 connected with the output of the receiver 12.

In a *per sè* known manner, the control device 23 is set up with a plurality of programmes, or operational sequences, capable of being selected, and possibly adjusted or modified, according to the coded control signal being sent to the driving input 24 and depending on the operational conditions detected by appropriate sensors being provided in the household appliance (not shown in Figure 1 owing to reasons of simplicity). Again in a *per sè* known manner, the electronic control device 23 is arranged to generate at an output 25 a series of actuating signals that drive the main operational parts included in the household appliance (schematically indicated as actuators 26) through respective power interfaces generally indicated with the reference numeral 27, so as to determine the progress of the programme selected by means of the push-button array 8.

In general, the operation of the household appliance shown in Figure 1 is substantially of a traditional type, so that there is no actual need to describe it here in detail.

It should however be noticed that, according to another feature of the present invention, even the power needed to supply the component parts housed in the control panel 5 is delivered through coupling means that do not use any galvanic connection between said control panel 5 and the casing 4. In particular, the voltage required to supply the stages 10 and 11 is taken at the input 20 of the oscillator 19, is transferred by means of inductive coupling between the coils 17 and 15, and is finally taken in by the power supply stage 14 that delivers it, after appropriate rectification and smoothing, at its output 13.

The main advantages of the present invention are clearly apparent now:
1) The control panel 5 is entirely isolated galvanically from the remaining part of the household appliance, in particular from the high-voltage power supply, so that a push-button set 8 of the membrane-switch type can be advantageously used without any safety problem.
2) Wire harnesses in the home appliance are reduced substantially, under resulting simplification of the assembly thereof.
3) The control panel 5 can be made as a separate subassembly with respect to the rest of the household appliance, so that it can conveniently be pre-assembled and tested before being actually installed on the household appliance itself.
4) On a mass production scale, this general simplification in the construction of the household appliance translates into a considerable reduction in manufacturing costs.

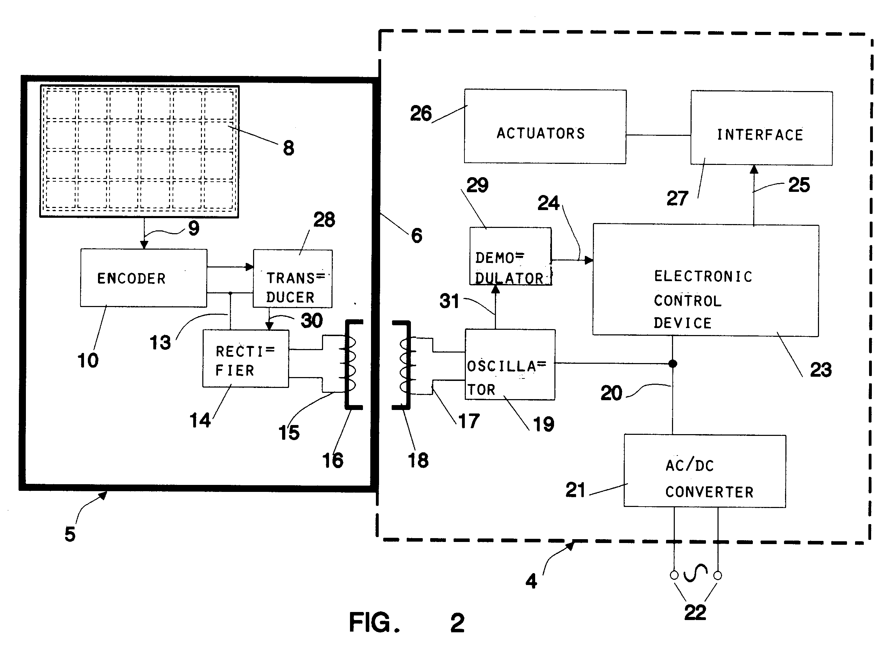

The household appliance according to the present invention, however, can be simplified to an even greater extent through the modified embodiment shown in Figure 2. This is substantially similar to the embodiment that has been described with reference to Figure 1, but enables the number of component parts to be reduced.

The embodiment shown in Figure 2 differs from the embodiment shown in Figure 1 mainly in that the window 7 can be omitted , whereas the transmitter 11 is replaced by a driving transducer, or modulator, 28 and the receiver 12 is replaced by a detector, or demodulator, 29. Said transducer 28 has an output 30 arranged to drive the coil 15 through the rectifier 14. To state it more precisely, the transducer 28 is arranged to apply across the coil 15 a dissipative load (for instance, resistive) that is capable of varying depending on the control signal received from the serial encoder 10.

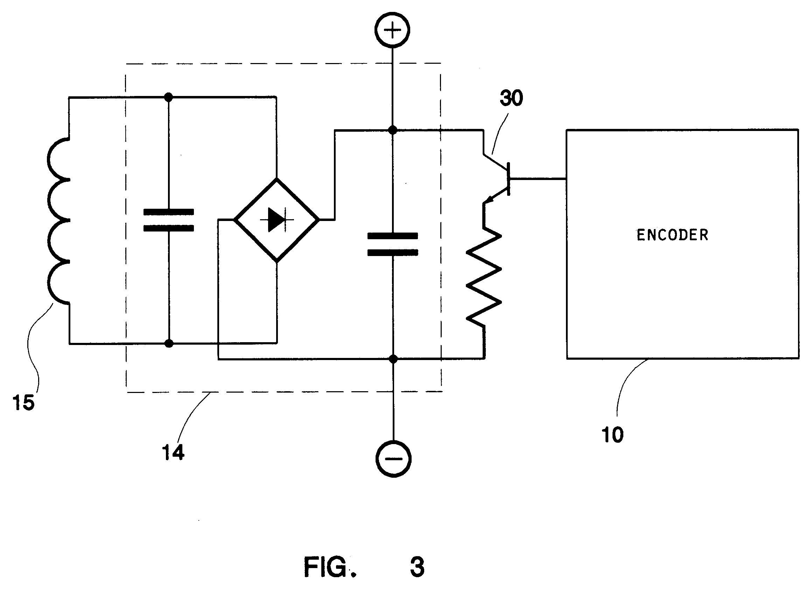

For instance, the transducer 28 can drive the coil 15 through the circuit that is shown schematically in Figure 3, the operation of which should be apparent to anyone skilled in the art and does not therefore require any further explanation.

The variations of said dissipative load across the coil 15 correspond to the information contained in the control signal at the output of the encoder 10 and amplitude-modulate accordingly the current that flows through the coil 15 with a preferably sine-waveform having the afore mentioned frequency F. This causes a corresponding modulation of the magnetic field coupling the coils 15 and 17, so that even the current flowing through the coil 17 will be modulated so as to represent the control signal generated at the output 9 of the push-button array 8.

The detector 29 may be of any *per sè* known type, with an input 31 connected to the coil 17 through the oscillator 19, and an output 24 that drives the control device 23 with the detected control signal, in the afore described way.

A single galvanically separated coupling, including the coils 15 and 17, is required with this embodiment to transfer the power supply from the output 20 of the converter 21 to the component parts of the control panel 5 and, at the same time, to drive the electronic control device 23, thanks to the transducer 28 and the detector 29, with the commands generated by the push-button array 8.

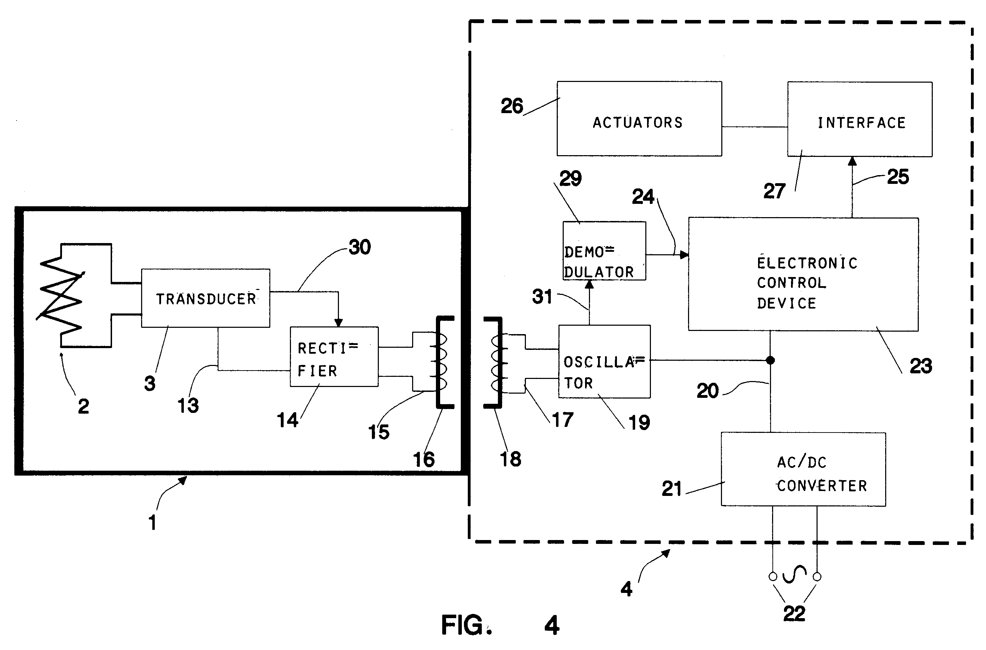

Such an embodiment is particularly suitable in view of its use in adverse environments, such as for instance the washing tub or tank of a washing machine. In this connection, in the embodiment shown in Figure 4, the peripheral unit to be coupled in a galvanically separated manner to the remaining portion 4 of the household appliance is one among the various sensors which, as previously stated, can drive the electronic control device 23.

By way of non-limiting example only, said peripheral unit is assumed to substantially comprise a water-tight casing 1, preferably made of plastics, housed in the washing tub or tank of a washing machine (not shown) to detect the temperature of a washing solution heated up by the actuators 26, which in this case comprise an electric heating element. Within said casing 1, a temperature sensor 2, as constituted for instance by a NTC thermistor, is in a heat-exchange relationship with the liquor being surveyed and is connected with the input of a transducer stage 3. This transducer stage 3, similarly to the transducer 28 in Figure 2, is adaped to generate, at an output 30, the afore cited control signal which is indicative of the temperature detected by the sensor 2, and which through the rectifier 14 modulates the current flowing through the coil 15 accordingly. For instance, the transducer 3 may comprise two comparators and two operational amplifiers (not shown for reasons of simplicity) and can be easily made by using a National LM324 integrated circuit. As it can be clearly inferred, the general operation of the ambodiment shown in Figure 4 is similar to the one described with reference to the embodiment shown in Figure 2, so that it will be not described here any longer.

In the embodiment described with reference to Figure 4, however, the present invention has a further advantage, in addition to the afore cited ones, in that, thanks to the physical separation of the sensor 1 from the remaining portion 4 of the household appliance, it does away with the need of using wire harnesses that are or may be exposed to contact with liquids. As a consequence, the household appliance according to the present invention turns out to be considerably more reliable and safer than traditional ones.

It will be appreciated that the above described embodiments of the invention may be the subject of any modification considered to be appropriate, without departing from the scopes of the invention. For instance, even in the case where the peripheral unit 1 should comprise a sensor 2, as shown in Figure 4, the transmission of the control signal can occur through a transmitter 11 and a receiver 12 that are similar to those described with reference to Figure 1. Furthermore, each transducer 11, 28, 3 may be associated to a respective receiver 12, or demodulator 29. As an alternative thereto, however, the receiver 12, or demodulator 29, may be associated in common to several peripheral units 5, 1.

Further different details may be introduced in each one of the afore described embodiments. For instance, both the power supply and the control signal may be transmitted from the peripheral units 5, 1 to the remaining portion 4 of the household appliance, or vice-versa, by means of respective inductive coupling means similar to those comprising the coils 15 and 17.

The need may furthermore arise for also the electronic control device 23 to transmit control signals to one or more among the peripheral units 5, 1 (for instance, to drive, in a substantially *per sè* known manner, a visual display located on the control panel of the household appliance). Anyone skilled in the art will easily appreciate that, according to the present invention, this may be accomplished with means similar (but arranged in a reverse order) to the transmitter 11 and the receiver 12, or similar to the transducer 28 (or the transducer 3) and the demodulator 29. In other words, the condition may arise in which one or more peripheral units 5, 1 are supplied with energization power by the household appliance 4 by means of respective inductive couplings 14 - 19, send control signals to the electronic control device 23 by means of galvanically separated coupling means 11, 12 (or 28, 29, or 3, 29), and furthermore receive control signals from the electronic control device 23 through similar additional coupling means. Considering by mere way of non-limiting example the embodiment illustrated in Figure 1, said additional coupling means will comprise a further transmitter 11 located in the appliance casing 4 and driven by the electronic control device 23, whereas a further receiver 12 will be provided in the peripheral unit 5. In conclusion, the galvanically isolated coupling means adapted to transmit the various control signals to and/or from the peripheral units 5, 1 may be arranged or combined in various ways, and may be provided in any different number, according to the needs.

## Claims

1. Household appliance with an electronic control device (23) capable to be connected to the power supply mains and driven by at least a peripheral unit (5, 1) adapted to transmit control signals to said electronic control device, and possibly receive control signals from said electronic control device, **characterized in that** it comprises first galvanically separated coupling means (14 - 19) capable of transmitting energization power from the power supply mains (20 - 22) to the peripheral unit (5, 1), as well as further galvanically separated coupling means (11, 12; 28 - 31) capable of transmitting said control signals from the peripheral unit (5, 1) to said electronic control device (23), and/or vice-versa.

2. Household appliance according to claim 1, **characterized in that** said peripheral unit (5, 1) is fully isolated electrically from the remaining portion (4) of the household appliance.

3. Household appliance according to claim 1, **characterized in that** said first coupling means comprise at least a first coil (15) located in the peripheral unit (5, 1) and inductively coupled with at least a second coil (17) which is located in the remaining portion (4) of the household appliance and is part of an oscillator (19) connected with the power supply circuit (20 - 22) of the electronic control device (23).

4. Household appliance according to claim 3, **characterized in that** said first coil (15) is connected with the input of a power supply circuit (13, 14) of the peripheral unit (5, 1), with which it forms a resonant circuit arranged to give resonance at a pre-determined frequency (F) to which said oscillator (19) is tuned.

5. Household appliance according to claim 1, **characterized in that** said further coupling means comprise a remote transmitter (11) located in the peripheral unit (5, 1) and adapted to drive the electronic control device (23) with said control signals through a receiver (12) located in the remaining portion (4) of the household appliance.

6. Household appliance according to claim 3, **characterized in that** said further coupling means comprise a transducer (28, 3) located in the peripheral unit (5, 1) and having an output (30) adapted to drive the first coil (15) so as to modulate with said control signals the magnetic field through which said coils (15, 17) are mutually coupled, the second coil (17) being connected with the input (31) of a demodulator (29) adapted to detect the control signals and supply them to the electronic control device (23).

7. Household appliance according to claim 1, **characterized in that** said peripheral unit (5) comprises a push-button array (8) which is accessible from the outside of the household appliance and is capable of generating at least one of said control signals.

8. Household appliance according to claim 7, **characterized in that** said push-button array (8) is of the membrane-switch type.

9. Household appliance according to claim 1, **characterized in that** said peripheral unit (1) comprises a sensor (2) capable of generating at least one of said control signals.
